# EUROPEAN PATENT APPLICATION

(11) **EP 1 447 693 A1**
(43) Date of publication of application: **18.08.2004**
(21) Application number: 03290342.9
(22) Date of filing: 12.02.2003
(51) Int. Cl.: G02B 6/293

(54) **Flexible Passband Filter**

(71) Applicant: Avanex Corporation, Fremont, CA 94538 (US)
(72) Inventor: Münzner, Roland, Dr., 73266 Bissingen/Teck (DE); Wessel, Rudolf, Dr., 70372 Stuttgart (DE)
(74) Representative: Haines, Miles John

(57) **Abstract**

The invention is related to an optical band filter comprising an arrayed waveguide grating (AWG) (18) connected to a first and a second free space region (17, 19). The optical filter comprises a mean for shifting (12) the incoming wavelengths in phase and/or amplitude, a multi-mode waveguide (15) having a first end coupled to the ports of the mean for shifting (12) and a second end coupled to the first free space region (17). The mean for shifting (12) is a lattice filter with at least three stages of Mach Zehnder interferometers, providing a phase and/or amplitude difference over wavelength function similar to a saw tooth or staircase function.

## Description

### Background of the Invention

The invention relates to optical communications networks. In particular, the invention relates to an arrayed waveguide demultiplexing/switching element.

### BACKGROUND of THE INVENTION

Optical wavelength -division multiplexing (WDM) elements are becoming increasingly important in advanced optical communications networks incorporating optical fiber transmission paths. Silica optical fiber has a transmission bandwidth of over 300 THz/s. Such an extremely large bandwidth is, however, limited by the electronics on the transmitting and receiving ends. Such electronic transmitters and receivers, typically bases on silicon electronics, are limited commercially at the present time to 2 to 10 gigabits/s (Gbs). Further increases to 40 Gbs are contemplated, but further increases will be difficult to achieved.

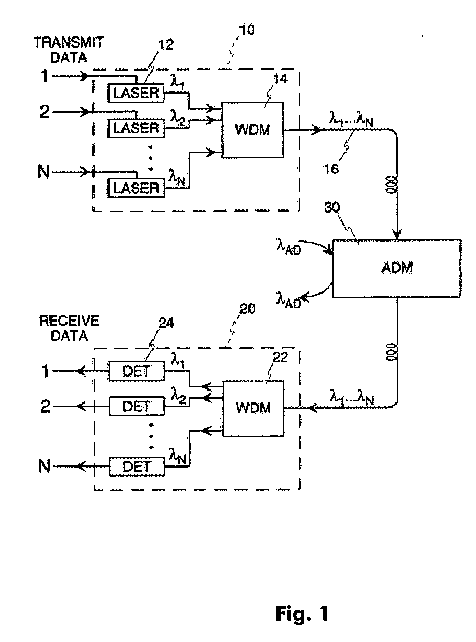

For these reasons, WDM has been proposed in which multiple (N) electronic data channels, as illustrated in FIG. 1, enter a transmitter 10 and modulate separate optical emitters such as lasers 12 having N respective output carrier wavelengths. Conveniently, these wavelengths are arranged in a WDM wavelength comb having the neighboring wavelengths separated by a substantially constant inter-channel spacing.

An optical wavelength-division multiplexer 14 combines the optical signals of different wavelengths and outputs the combined signal on a single optical fiber 16. An optical receiver 20 includes a wavelength-division demultiplexer 22 which divides its received signals according to their optical wavelength to N optical detectors 24 according to the same wavelength allocation. In view of usually experienced reciprocity in passive systems, a wavelength-division demultiplexer is usually substantially identical to a wavelength-division multiplexer with a reversal of their inputs and outputs.

Additionally, an optical add/drop multiplexer (ADM) 30 may be interposed on the optical path 16 between the transmitter and the receiver 20. The optical add/drop circuit 30 removes from the optical channel on the fiber 16 one or more wavelength channels at wavelength AD and inserts back onto the fiber 16 an optical data signal perhaps containing different information but at the same optical carrier wavelength AD. The ADM 30 is typically implemented with technology closely resembling the WDMs 14, 22. All-optical networks have been proposed in which a distributed networks having many nodes each including a transmitter 10 and receiver 20 are linked by a functionally passive network which routes the signals between the nodes according to their wavelengths. The routing elements in such an all-optical network require switching elements similar to the ADM 30.

In order to maximize the transmission capacity of the optical fiber 16, the wavelength channels should be placed as closely together as possible with a minimum channel spacing . In advanced systems, this inter-channel spacing is 1 nm or less for a signal centered around 1300 or 1550 nm, the preferred bands for silica fiber. Such closely spaced WDM networks are referred to as dense WDM networks (DWDM).

The network design described above may be subject to a problem arising from the fact that the operation of the transmitter 10, receiver 20 and intermediate node 30 are all referenced to the same set of WDM wavelengths. However each of the distributed elements must provide its own wavelength calibration. Due to environmental and aging effects, the wavelength calibration settings at one element are likely to differ from those at another element. In view of the close spacing of the optical channels, any miscalibration between network elements is likely to produce inter-channel interference.

For an optimized optical system, the fiber 16, the WDMs 14, 22, and the ADM 30 are typically designed to be single-mode at least at their ports for the optical wavelengths being used. Although each of the lasers 12 is likely emitting light across an exceedingly narrow bandwidth, the single-mode response of the frequency sensitive elements 14, 22, 30 usually has a wavelength (frequency) characteristic that approximates a gaussian distribution about the center wavelength. The value of the gaussian passband can be fairly freely chosen for present day fabrication techniques. However, the value of the passband is subject to countervailing restraints. For dense WDM systems, the inter-channel spacing is made as small as possible. The gaussian passband must be substantially smaller than the inter-channel spacing to avoid interference between channels. On the other hand, the frequency characteristics of the lasers 12 and other frequency-sensitive elements are subject to permanent or temporary variations. If the passband is made too small, the peak is very narrow and small variations in wavelength away from the peak's wavelength causes operation to shift to the sides of the peak, thereby degrading the signal strength. That is, for a strong signal the passband should be made as large as possible to provide a broad top of the peak and approximatly a rectangularly shaped band filter characteristics with minimised insertion loss using passive planar optical devices.

Moreover the concept of filtering wavebands, i.e. sets of adjacent DWDM channels, becomes increasingly important through the use of so-called multi granularity networks. Thereby sets of adjacent DWDM channels - e.g. wavebands covering 8 50GHz DWDM channels which are a typical configuration - are contemporarily routed or replaced in an add-drop device, before being finally demultiplexed into the single DWDM channels. Again a flat filter characteristic is required over the whole waveband to provide equal filter performance for all DWDM channels covered by a single waveband. Additionally, a steep decay of the filter characteristics at the band edges is required in order to lose only a minimum number of DWDM channels in between the wavebands.
Especially the use of band filters in multi granularity networks shows the need for filters, having filter characteristics of almost rectangular shape instead of a Gaussian filter profile.

Chen discloses an approach in U.S. Pat. No. 5,889,906, wherein he uses multi-mode sections, not in order to flatten the bandpass of the individual channels, but in order to obtain better uniformity for the different individual channels.

Dragone in U.S. Pat. No. 5,412,744 broadens the passband of a standard phasar by having a Y-coupler interposed between the single-mode input waveguide and two single-mode waveguides separately coupled into the free space region . The result is to spread the intensity for one mode across a larger area on the input wall of the free space region 48. This approach suffers a power penalty of 2 to 3 dB.

Dragone in U.S. Pat. No. 5,488,680 suggests the advantage of cascading wavelength routing devices such as phasars. One configuration he develops includes a Mach-Zehnder interferometer (MZI), a 3 dB cross coupler between the two output waveguides of the MZI, and a standard phasar having a first free space region receiving the two waveguides from the MZI on its input wall. The geometry is such that one output waveguide focuses radiation of one wavelength at the output of the phasar and the other output waveguide radiation of another wavelength there with about 0.9 dB ripple for wavelengths in between. Thereby, the passband of the combination of the Mach-Zehnder and the phasar is flattened.

US 6,289,147 involves a phasar which is an optical coupler, such as a wavelength multiplexer or demultiplexer, which includes an arrayed waveguide grating between two free space regions, particularly applicable to a wavelength-division multiplexing (WDM) communication system transmitting a plurality of wavelength-differentiated signals separated by a wavelength channel spacing. A Mach-Zehnder interferometer (MZI) receives an optical input signal, divides it into two parts, and passes the parts through waveguides of differing lengths, thereby introducing a phase difference between the two parts dependent upon the wavelength. The MZI is designed with a free spectral range equal to the channel spacing so that the MZI presents the same optical characteristics for each of the WDM signals. The two parts of the MZI signal are input to a multi-mode interferometer (MMI) outputting to a first free space region. The MMI preferably has a length which is a half integral of the beat length of the two lowest order modes such that the lateral position of maximum intensity at the interface between the MMI and the free space region depends upon the phase difference of the signals from the MZI. The MZI inputs are laterally spaced on one side of the MMI so that the signal output from the MMI to the free space region has a lateral spatial optical dispersion matching the wall optical dispersion of the phasar. Thereby, the transmission characteristics of the phasar are flattened for each of the passbands of the phasar. Alternatively, such an arrangement can be disposed on the output side.

The existent solutions, that combine an asymmetric MZI and an AWG by an interconnecting MMI section or directional coupler in order to compensate the angular dispersion of the AWG by the help of the linear phase shift in the MZI, all suffer from a lack of flexibility for the spatial shift of the input field for the first AWG star coupler. The linear phase shift provided by the MZI device in front of the input star coupler offers the possibility of compensating the angular dispersion of the AWG and thus achieving a flat top characteristics at low insertion loss. The 'steepness' of the decay of the passbands, however, can not be addressed independently of that. Furthermore, neither arrayed waveguide gratings (AWG) nor lattice filters as stand alone solutions exhibit a high flexibility in tailoring flat passbands with steeply decaying edges.

Accordingly, it is desired to provide a passband filter design which offers passband flattening and steepness of the passband edges with low loss in a simple design.

### SUMMERY OF INVENTION

For further enhancement of passband shaping while maintaining an inherent low insertion loss characteristics of the integral device a combination of a complete lattice filter, i.e. a cascade of several MZI devices, with an AWG where the linkage between both again is realised by a MMI or directional coupler device, is suggested.
This solution allows compensating the angular dispersion of the AWG by a shift of the mode field at the multimode interferometer or directional coupler. The phase shifting and amplitude properties of the lattice filter can easily be adapted to the required specifications of the band filter. The band pass filter then comprises low insertion loss and small pass band ripples in combination with sharp filter characteristics at the band edges.
Furthermore, the design faces no substantial penalties due to chromatic dispersion as it is the case when flat passband characteristics should be achieved by mere AWG devices.

### BRIEF DESCRIPTION OF THE DRAWINGS

FIG. 1 is a schematic diagram of a wavelength-division multiplexing (WDM) optical fiber communication system.
FIG. 2 is a schematic illustration of the invention design for the passband filter
FIG. 3 is a schematic illustration of a first embodiment of a lattice filter for a passband filter
FIG. 4 is a schematic illustration of a second embodiment of a lattice filter for a passband filter
FIG. 5 shows the amplitude of the optical filed at the end of the MMI or directional coupler
FIG. 6 shows the optical field at the output side of the second free space region of the AWG for a first embodiment of the phase response of the lattice filter
Fig. 7 shows the optical field at the output side of the second free space region of the AWG for a second embodiment of the phase response of the lattice filter
Fig. 8 is an alternative response of the lattice filter

### SHORT DESCRIPTION OF THE INVENTION

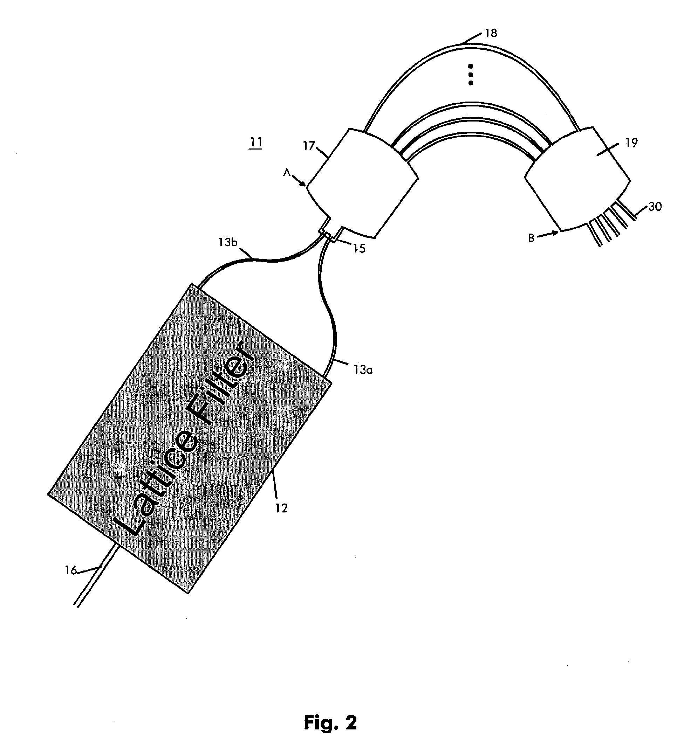

In a schematic structure FIG. 2 describes a pass band filter. The single optical fiber 16 is connected to the input of a lattice filter 12 having two output ports 13a and 13b which are linked to the two input ports of a multimode interferometer device 15. The output profile A of the MMI is the curved input profile of a first free space region 17. The free space region 17 guides the wavelength to an arrayed waveguide grating AWG 18 and a second free space region 19. At the output profile B of the second free space region 19 the output ports 30 for the different wavelengths are linked.
The free spectral range of the lattice filter thereby equals the channel spacing of the AWG.
The free spectral range of an optical device is the wavelength difference over which the spectral characteristics repeat, generally corresponding to the next higher multiple of the optical wavelength. At higher orders of a grating the free spectral range becomes increasingly narrow. In an AWG the free spectral range corresponds to the spectral resolution between two refractive orders. The spectral resolution of an AWG is used to spectrally separate the narrow wavelength bands, i.e. the channels of the AWG.

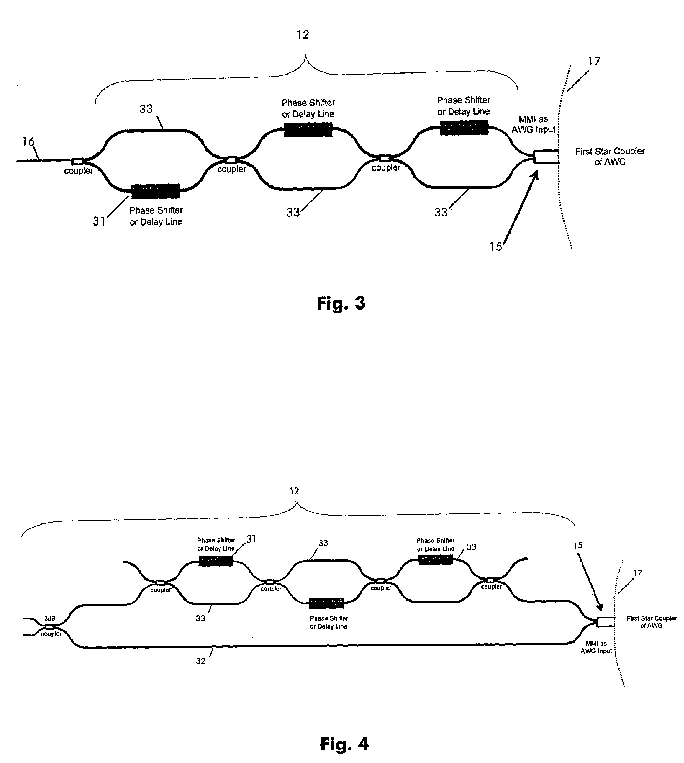

Fig. 3 is a first embodiment of a lattice filter forming the first stage of the band pass filter. The Single fiber 16 is connected to a coupler device and a Mach-Zehnder interferometer structure 33. The Mach-Zehnder interferometer MZI structure is cascaded three times. Between the branches of the MZI a phase shift is created using a delay line 31 or a phase shifter with an applied electrode to heat the waveguide of the branch. The output of the last MZI is connected to the MMI or directional coupler 15 and to the first free space region 17 of the AWG.

Fig. 4 shows a second embodiment of a lattice filter with cascaded MZI stages and a separate line combined together with one output port of the MZI cascade.

The lattice filter is designed in such a way that it provides specific phase and amplitude functions of the transferred modes in its two output arms. These phase and amplitude functions then result in a spatial shift of the mode field entering the first free space region 17 at the curved profile A as output of the MMI section or directional coupler due to interference in the MMI or directional coupler device. In order to see this, note that the optical signals from the two inputs to the MMI 15 can be considered to propagate independently. However, the two radiation signals interfere according to the phase difference between them. At the profile A the intensity distribution between the MMI and the first free space region 17 has a spatial dispersion across the port that e.g. can be designed in such a way that it varies almost linearly with the phase difference.
Thereby the obtained spatial shift is designed is such a way that the angular dispersion of the AWG is compensated for the wavelengths of the flat passband whereas it is enhanced for the wavelengths in between the single passbands. Due to the fact that the free spectral range of the lattice filter equals the channel spacing of the AWG this spatial shifting is repeated for each AWG output channel.
In order to limit the insertion loss of the whole band filter device to approximately 3dB the AWG loss has to be minimized by adapting the mode fields of the AWG output waveguides 30 at the profile B to the spatially shifted mode field at the profile A. Furthermore, the mode field at the input profile A should exhibit no significant changes during spatial shifting which is accomplished by an appropriate design of the MMI section. Finally, the lattice filter should be designed in a way to limit its insertion loss at 1 dB which reduces the number of stages the lattice filter may comprise. Theoretically the spectral response of a lattice filter of N stages can be a perfect passband filter when N tends towards infinity, but only for a single wavelength. For multiplexing or add-drop functionality a cascade of lattice filters then has to be used. The proposed device thus combines the benefits of achieving an almost perfect filter characteristics for a number of parallel DWDM channels or wavebands while using only a very restricted number of stages in a single lattice filter. This is of particular importance as an increasing number of stages increases the size and the problems in realization in a silica on silicon technology.

In order to obtain a band filter device with tunable filter characteristics it is sufficient to tune the optical path length differences occurring in the lattice filter which can be accomplished by variations of the refractive index in the corresponding MZI arms. Techniques are well know for dynamically varying the refractive index in a waveguide by an electronic signal, forexample, by a thermo-optic, electro-optic or piezo-electric effect.
As stated before the design of the MMI or directional coupler section is of particular importance to obtain the desired spatial shift of the AWG input mode field without changes in the field during shifting.
The two waveguide arms of the lattice filter are separately coupled into the multi-mode interference interferometer (MMI) 15 with a gap between them on one longitudinal end of the MMI 15. Although the lattice filter and MMI are closely coupled without a clear interface between them, it can be considered that the signals at a given wavelength propagating on the two lattice filter waveguides enter the MMI with equal intensity but with a phase difference varying with wavelength of the two signals. Furthermore, any unintended coupling during close approach can be partly eliminated by a slight reduction of the length of the MMI section.
A wide MMI supports many modes and results in nearly perfect imaging using either paired or general interference. However perfect imaging is not particularly desired in the present invention. Instead, it is desired to achieve linear dispersion of a gaussian peak and low crosstalk, which is better realized with smaller MMI sections supporting, e.g. only two lateral modes, and consequently introducing some excess loss of approximately 0.3 dB.

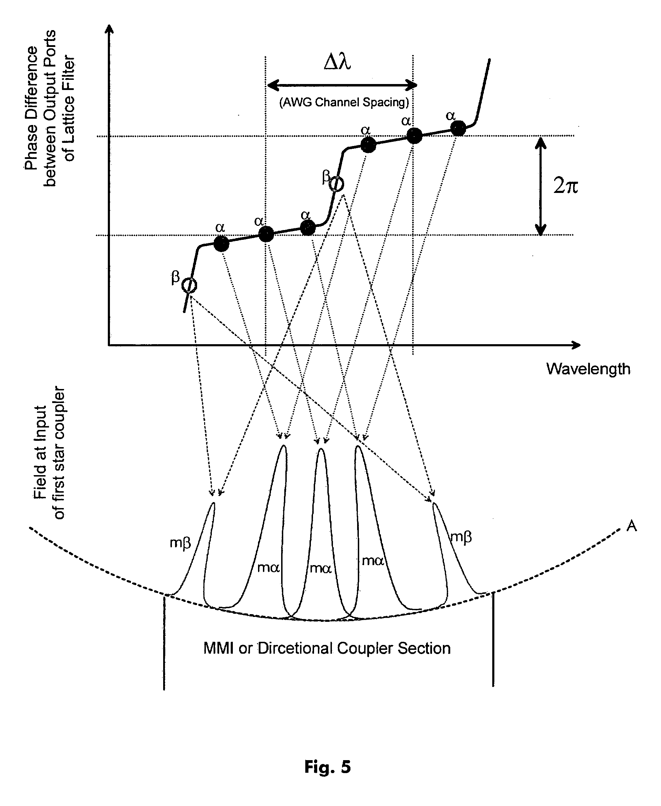

Fig. 5 shows the amplitude of the optical field, that is generated at the end of the MMI or directional coupler section for input into the first star coupler, at profile A, of the AWG in function of the phase difference between the two lattice filter output ports having 50% power splitting. Within each pass band marked by the points α the linear dependence of the phase difference on wavelength is adjusted in such a way that the corresponding linear movement of the optical input field as shown in the modes mα fully compensates the angular dispersion of the AWG. The slope of the level with the points α represents the degree of angular dispersion. In between two pass bands α a phase shift at high slope in the phase difference marked by the ring β moves around the optical input field to its initial position for the beginning of the adjacent pass band. The optical field thereby moves through the green ring of phase difference resulting in the optical field plotted in the mode mβ.

The phase difference function obtained by the lattice filter shows a step function with steps quite flat for the band pass and steep increase to come to next pass band.

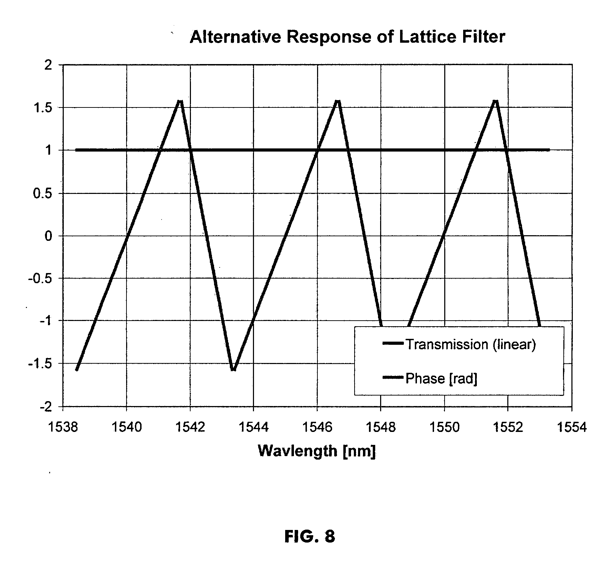

An alternative to this the characteristics of the phase difference function shows a saw tooth as shown in Fig. 8 maintaining amplitude 1 for the bar state response of the MZI cascade in the upper arm of the lattice filter shown in Fig. 4. The phase difference function resulting for the whole lattice filter of Fig. 4 is then the saw tooth function with 50% amplitude splitting between the two output arms of the MZI.
The saw tooth function as the step function can be designed with the lattice filter.

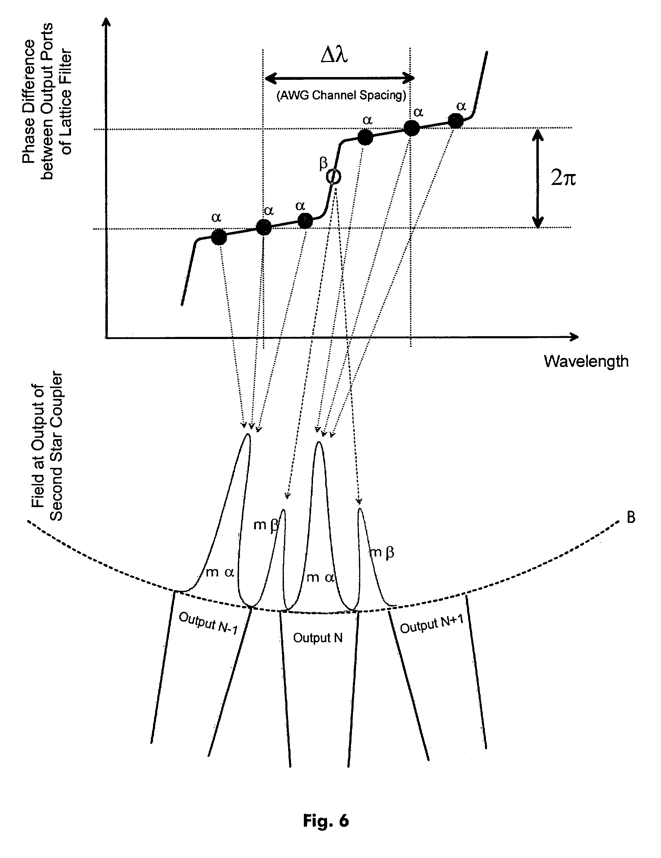

Fig. 6 shows the amplitude of the optical field arriving at the output side of the second star coupler of AWG and entering the output waveguides at profile B. As a consequence of the wavelength dependent shifting of the input field from Fig. 5 the angular dispersion of the AWG is compensated and the output field remains centred at the output waveguide for the whole pass band α. This leads to an essentially flat pass band. The fact that the next order of the lattice filter is accessed by a phase shift at high slope, passing the optical field through the position marked by mode mβ where it is found in between two output channels, additionally guarantees steep edges of the pass band.

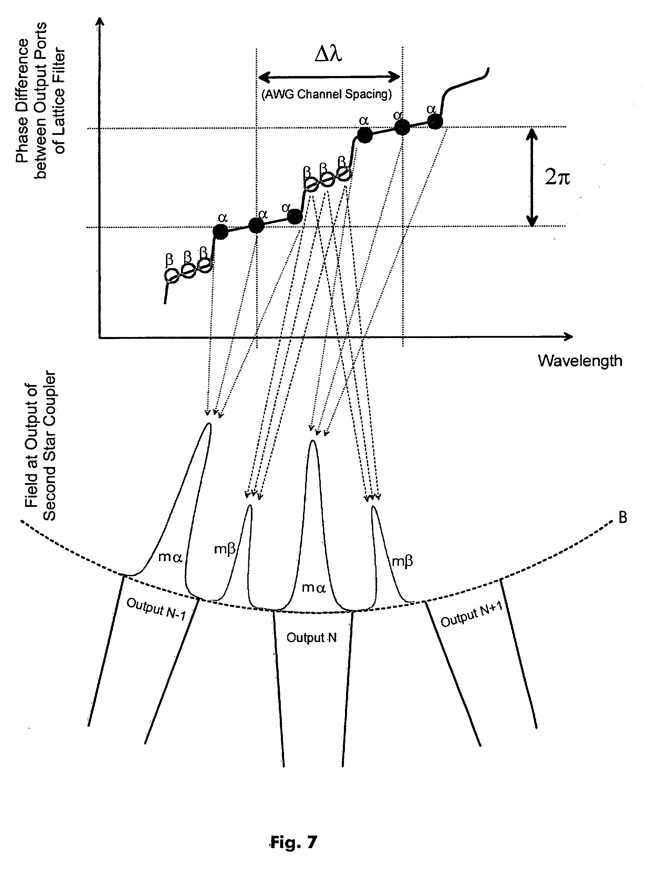

Fig 7 is a variant of the configuration presented in Fig. 6, that is especially useful if one or more DWDM channels are skipped in between two adjacent pass bands. The staircase function from Figs 5 and 6 is now changed to exhibit an additional flat region for wavelengths lying between two adjacent pass bands. For this regions the phase difference found between the lattice filter output ports shows a difference of approximately π to the pass band regions. In all 'flat' regions, for pass bands as well as for intermediate wavelengths, the slope of the phase difference between the output ports of the lattice filter is adjusted in such a way that the angular dispersion of the AWG is compensated. The optical field at the output side of the second star coupler is therefore centered within an output waveguide or lying between the output waveguides. In this variation the output waveguides show a larger separation in the case of 'skipped DWDM channels'. We thus have a combination of flat pass bands with steep edges and strong suppression between adjacent channels.

With the combination of lattice filter and AWG via a MMI the flat pass band with steep edges is realized.

If a wide spacing between the output ports of the filter is requested a directional coupler allows a larger shift of the optical field, but less control on the mode field maintaining ist shape during shifting is achieved. In a result the filter response will have a dip.

The description above is an example of a realization of the invention and does not limit the invention to the embodiments described above. Lattice filters with different designs can be used to realize the invention. Especially folded structures and/or asymmetric Mach Zehnder structures are also solving the inventions design request.
The method to optimize the pass band filter requests a function whch allows the optical mode to shift over the profile A slowly with a short time "jump back" step to the other side of the spatial extension.

The band pass filter are realized on a silica on silicon technology, where the waveguides are structured by doping silica layer.

## Claims

1. Optical band filter comprising an arrayed waveguide grating (AWG) (18) connected to a first and a second free space region (17, 19), a mean for shifting (12) the incoming wavelengths in phase and/or amplitude, a multi-mode waveguide (15) having a first end coupled to the ports of the mean for shifting (12) and a second end coupled to the first free space region (17), **characterized in that** the mean for shifting (12) is a lattice filter with at least three stages of Mach Zehnder interferometers, providing a phase and/or amplitude difference over wavelength function similar to a saw tooth or staircase function.

2. Optical band filter (1) comprising an arrayed waveguide grating (AWG) (18) connected to a first and a second free space region (17,19), a mean for shifting (12) the incoming wavelengths in phase and/or amplitude, a directional coupler having a first end coupled to the ports of the mean for shifting and a second end coupled to the first free space region, **characterized in that** the mean for shifting (12) is a lattice filter with at least three stages, providing a phase and/or amplitude difference over wavelength function similar to a saw tooth or staircase function.

3. Optical band filter according to claim 1 or 2, **characterized in that** the lattice filter is tuneable.

4. Optical band filter according to claim 1, **characterized in that** the multimode waveguide is adapted to the angular dispersion of the AWG.

5. Method for optimisation of an optical band filter for different wavelengths comprising the steps:
- providing a phase difference over wavelength function similar to a saw tooth or staircase function by a lattice filter of at least three stages of Mach Zehnder interferometers,
- Adapting the phase difference function of the different wavelengths to the angular dispersion of an arrayed waveguide grating with two free space regions by a multimode waveguide or a directional coupler,
- Separating the different wavelengths in an arrayed waveguide grating into wavebands

6. Waveguide chip comprising a substrate, in particular of silicon, a silica layer provided on the substrate, wherein the optical band pass filter (1) according to claim 1 and 2 is realized in the silica layer.

7. Wavelength division multiplexing communications system with transmitters, transmission line, receivers, comprising an optical band filter (1) according to claim 1 or 2.
